# EUROPEAN PATENT SPECIFICATION

(11) **EP 1 390 251 B1**
(45) Date of publication and mention of the grant of the patent: **02.08.2006**
(21) Application number: 02733617.1
(22) Date of filing: 29.05.2002
(51) Int. Cl.: B62D 7/18, B60T 1/06

(54) **TRUCK CORNER MODULE**
LENKBARE RADAUFHÄNGUNG
MODULE DE SUSPENSION DE ROUE POUR CAMION

(30) Priority: 31.05.2001 NL 1018191
(43) Date of publication of application: 25.02.2004
(73) Proprietor: AB SKF, 41550 Göteborg (SE)
(72) Inventor: TANKE, Jesko-Henning, D-97422 Schweinfurt (DE); DITTMAR, Rico, D-98574 Schmalhalden (DE); KAPAAN, Hendrikus, Jan, NL-3435 DM Nieuwegein (NL); HUHN, Norbert, D-97424 Schweinfurt (DE); GOTHBERG, Sven, S-421 59 V Frolunda (SE)
(74) Representative: van Westenbrugge, Andries
(86) International application number: PCT/NL2002/000341
(87) International publication number: WO 2002/096742

(56) References cited:
- EP-A- 0 905 006
- EP-A- 1 081 019
- DE-A- 4 021 572
- DE-A- 19 538 212
- US-A- 5 413 365
- PATENT ABSTRACTS OF JAPAN vol. 017, no. 623 (M-1511), 17 November 1993 (1993-11-17) -& JP 05 193513 A (TOYOTA MOTOR CORP), 3 August 1993 (1993-08-03)

## Description

The invention is related to a truck corner module, compnsing a wheel carrying unit provided with an axle stub and a kingpin arrangement as well as an auxiliary unit mounted onto the wheel carrying unit, said auxiliary unit being provided with at least parts for a brake means.

Such a truck corner module is disclosed in GB-A-378.164. The object of the invention is to provide an improved truck corner module, which has a less complicated construction and which is equipped with basic elements such that the module can be completed by simply adding the components which are required for specific applications.

This object is achieved in that the axle stub comprises a conically or cylindrically shaped end at the free end of which a screw portion is provided, and the kingpin arrangement comprises a correspondingly conically or cylindrically shaped bore at the inner end of which a corresponding nut portion is provided.

The conically shaped end can also consist of a slitted tapered sleeve, threaded onto a cylindrical stub axle end. A cylindrical centering means can also be considered.

The axle stub for e.g. a truck or trailer may be either solid or hollow with mechanical means at both ends to connect the rotating end or the non-rotating end for structural driven or non-driven purposes. Having regard to the envisaged application in a truck corner with e.g. a rotating wheel bearing outer ring, said axle stub can comprise two mutually spaced raceways for a wheel bearing means. Preferably, said wheel bearing means comprises two tapered bearings, and the raceways of the axle stub are arranged symmetrical with respect to a plane perpendicular to the axle stub axis.

Furthermore, the wheel carrying unit may comprise a mounting part, and the auxiliary unit comprises a mounting hole mounted onto the mounting part, in such a way that the axle stub projects at one side of the auxiliary unit, and the kingpin arrangement at the other side of the auxiliary unit. A compact, stiff and light construction is obtained by bolting the wheel carrying unit and the axle unit together.

The auxiliary unit may comprise two fixation ears for a brake, said fixation ears and bolt holes being positioned on opposite sides of a plane defined by the axle stub axis. Preferably, the wheel carrying unit comprises a base member which carries the support bearings for accommodating the kingpin. The kingpin top and bottom bearing support can consist of a roller, ball, self adjusting or plain bearing or a combination of these. The base member carries the axle stub, said axle stub facing away from the support rings.

The invention will now be described further with reference to an embodiment shown in the drawings.
Fig. 1 shows a disassembled view of the truck corner module according to the invention.
Fig. 2 shows an assembled view.
Fig. 3 shows a cross section through the truck corner module according to fig. 2, including kingpin/housing connection with suspension beam.
Fig. 4 shows a front view of the truck corner module.
Fig. 5 shows a split embodiment of the auxiliary unit.
Fig. 6 shows a further embodiment.

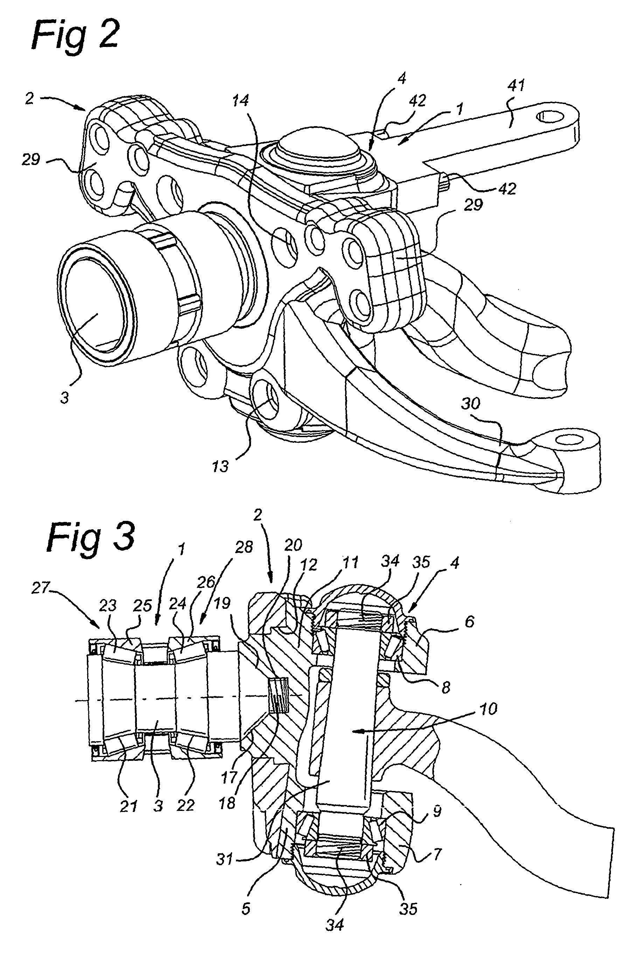

The truck corner module as shown in the figures comprises a wheel carrying unit 1 and an auxiliary unit 2. The wheel carrying unit comprises an axle stub 3 as well as a kingpin arrangement 4. As shown in the cross section of fig. 3, the kingpin arrangement comprises a base member 5, on one side of which the two coaxial support rings 6, 7 have been provided. These coaxial support rings carry the kingpin bearings 8, 9, by means of which the kingpin 10 is rotatably held. The kingpin 10 itself is connected to the truck wheel suspension. Said suspension comprises an axle shaft 41, having a bushing 40 in which the conically shaped part 31 of the kingpin 10 is fitted. By means of nuts 35 and kingpin threaded ends 34, the kingpin 10 is held with respect to the bearings 7, 8.

At the opposite side of the base member 5, the axle stub 3 projects. In the vicinity of a joining area between the axles 3 and the base part 5, a mounting part 11 is provided which tightly fits in the bore 12 provided in the auxiliary unit 2. Thereby, a stable position of the auxiliary unit 2 with respect to the wheel carrying unit 1 is obtained.

By means of bolts (not shown), which are to be accommodated in the holes 13, 14 of the auxiliary unit 2, and in the screw threaded holes 15, 16 of the wheel carrying unit 1, these components can be firmly clamped together.

The axle stub can be carried out as a unity with the base part 5. However, in the embodiment shown the axle stub 3 is a separate component, which at its end facing towards the base part 5 has been provided with a cone shaped portion 17 as well as a screw threaded portion 18. The base part 5 also has a correspondingly cone shaped bore 19, which merges into the screw threaded bore 20.

By rotating the axle stub 3, the screw portions 20, 18 tightly draw the cone shaped portions 17, 19 together, thus ensuring a tight fit of the axle stub with respect to the base part 5. A securing means (not shown) can be applied for securing the axle stub 3 with respect to the base part 5.

The axle stub furthermore carries raceways 21, 22 which form part of the wheel bearings 27, 28 which furthermore comprise series of rollers 23, 24, and outer rings 25 respectively 26.

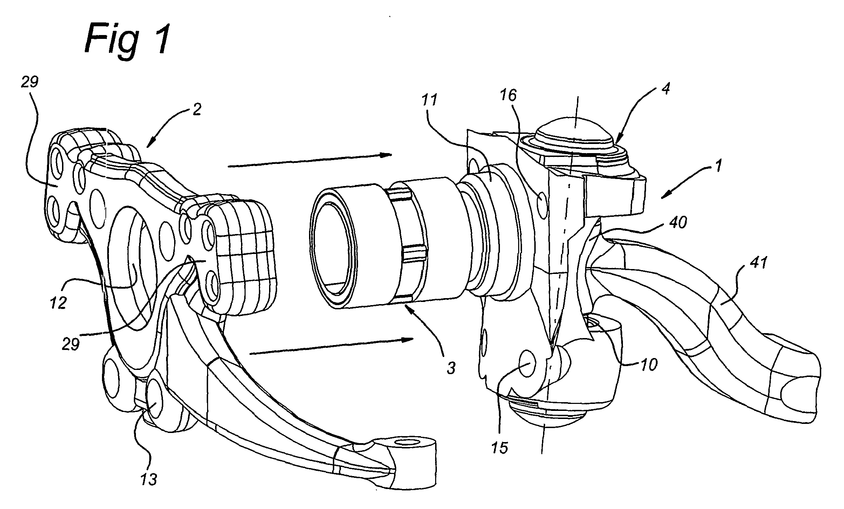

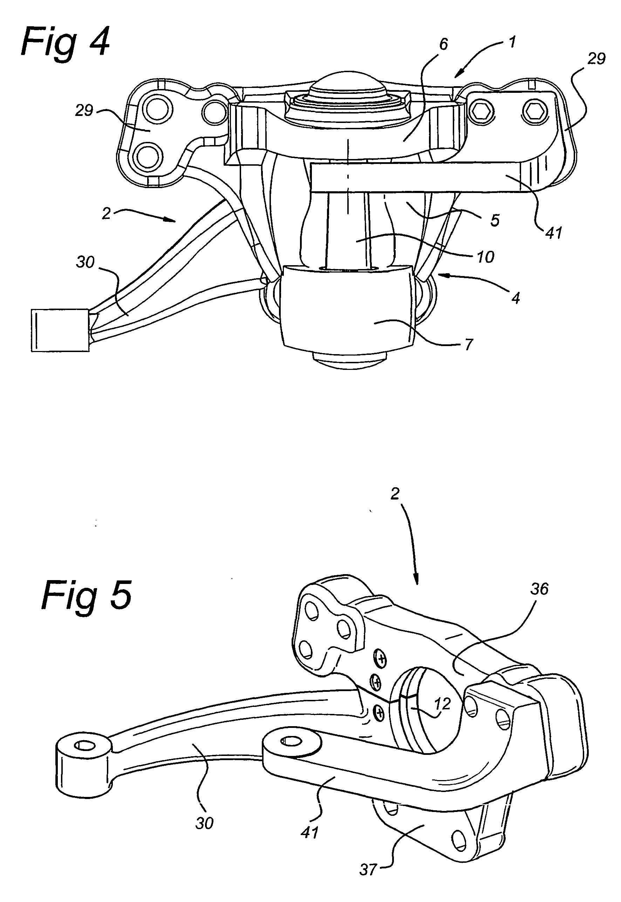

The auxiliary unit 2 according to figures 1-5 is provided with an integral steering lever 30, as well as with integral mounting ears 29 for mounting a brake actuator. According to the embodiment of figure 5, the auxiliary unit 2 can consist of two halves 36, 37. The upper half 36 may comprise brake functions, the lower half 7, e.g. steer functions. This embodiment enables assembly in case the wheel flange is bigger than the center ring diameter in the knuckle.

Furthermore, a second, detachable steering lever 41 can be provided for power steering purposes, as shown in figures 2, 4 and 5. This lever can be attached by means of bolts 42. In the embodiment of figure 4 and 5 the lever 41 is attached with the bolts (not shown) by means of which also the brake calliper is attached.

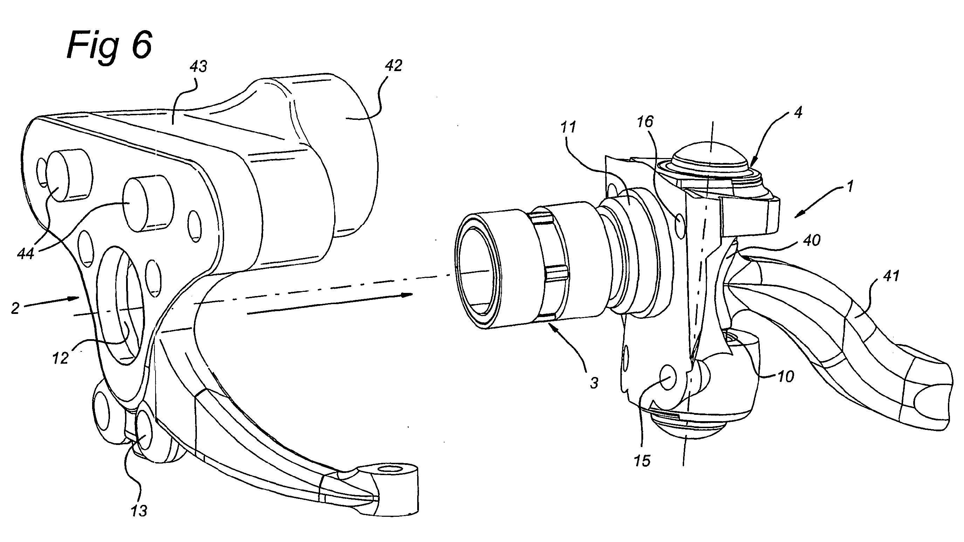

The embodiment of figure 6 shows the module in exploded view in analogy to the embodiment of figure 1. In this embodiment, the auxiliary unit 2 has been provided with two integrated mechanical actuators 44, only the actuating heads of which are visible. The mechanical actuators may for instance, in a known way, comprise walls through actuators.

Furthermore, the auxiliary unit 2 comprises an integrated motor 42, which may be of a hydraulic, pneumatic or electric type. The motor 42 powers the actuators 44 through a gear reduction mechanism 43, which is known per se and which has been integrated in the auxiliary unit 2 as well.

## Claims

1. Truck corner module, comprising a wheel carrying unit (1) provided with an axle stub (3) and a kingpin arrangement (4) as well as an auxiliary unit (2) mounted onto the wheel carrying unit (1), said auxiliary unit (2) being provided with at least parts (29; 42-44) for a brake means, **characterized in that** the axle stub (3) comprises a conically or cylindrically shaped end (17) at the free end of which a screw portion (18) is provided, and the kingpin arrangement comprises a correspondingly conically or cylindrically shaped bore (19) at the inner end of which a corresponding nut portion (20) is provided.

2. Module according to claim 1, wherein the mounting means comprise a centering/central bolt connection.

3. Module according to claim 1 or 2, wherein the mounting means comprise a conical sleeve with sleeve thread on a cylindrical connection.

4. Module according to any of the claims 1-3 wherein securing means are provided for securing the mounting means (17, 19; 18, 20).

5. Module according to any of the preceding claims, wherein the axle stub (3) is solid.

6. Module according to any of claims 1 - 4, wherein the axle stub has a throughgoing bore, e.g. for accommodating the drive shaft of a driven wheel.

7. Module according to any of the preceding claims, wherein the axle stub may consist of two or more permanently joint parts.

8. Module according to any of the preceding claims, wherein the axle stub (3) comprises two mutually spaced raceways (21, 22) for a wheel bearing means (27, 28).

9. Module according to any of the preceding claims wherein the wheel bearing means (27, 28) comprises roller bearings, ball bearings or a combination thereof.

10. Module according to any of the preceding claims, wherein the wheel carrying unit (1) comprises a mounting part (11), and the auxiliary unit (2) comprises a mounting bore (12) mounted onto the mounting part (11), in such a way that the axle stub (3) projects at one side of the auxiliary unit (2), and the kingpin arrangement (4) at the other side of the auxiliary unit (2).

11. Module according to claim 10, wherein the wheel carrying unit (1) and the auxiliary unit (2) are bolted together.

12. Module according to any of the preceding claims, wherein the auxiliary unit (2) carries a steering device, e.g. a lever (30).

13. Module according to any of the preceding claims, wherein the auxiliary unit (2) comprises two fixation ears (29) for a brake, said fixation ears (29) being positioned on opposite sides of a plane defined by the axle stub axis.

14. Module according to any of the preceding claims, where the auxiliary unit (2) carries a hydraulic, pneumatic, electric-mechanical brake or a combination thereof.

15. Module according to any of the preceding claims, wherein the wheel carrying unit (1) comprises a base member (5) which carries two coaxial support rings (6, 7) for accommodating kingpin support bearings (8, 9).

16. Module according to claim 15, wherein the bearings comprise a roller bearing, ball bearing and/or a plain bearing.

17. Module according to claim 15 or 16, wherein the base member (5) carries the axle stub (3), said axle stub (3) facing away from the support rings (6, 7).

18. Module according to claim 15 or 16 wherein the auxiliary unit is made of a metallic, non-metallic or composite material or obtained by powder metal techniques.

19. Module according to claim 15 or 16, wherein the wheel carrying unit is made of a metallic, non-metallic or composite material or obtained by powder metal techniques.

20. Module according to any of the preceding claims, wherein the module incorporates sensors for controlling bearing speed, bearings load, angular displacement, temperature, ABS brake system etc.

21. Module according to any of the preceding claims, wherein the kingpin arrangement (4) comprises a kingpin (10) having fixation means (40) for a suspension bearing (41).

22. Module according to any of the preceding claims, wherein a power steering lever (41) is connected to the axle stub and kingpin arrangement.

23. Module according to any of the preceding claims, wherein the auxiliary unit (2) is provided with fixation means (29) for mounting a brake means.

24. Module according to any of claims 1-22, wherein the auxiliary unit (2) is provided with at least one integrated actuator (44) for a brake means.

25. Module according to claim 23, wherein the auxiliary unit (2) is provided with a motor means for powering the at least one actuator (44).

26. Module according to claim 25, wherein the motor means (42) is of a pneumatic or a hydraulic type.

27. Module according to claim 25, wherein the motor means (42) comprises an electric motor.

28. Module according to any of claims 24-27, wherein the auxiliary unit (2) comprises gear reduction means (43).

## Patentansprüche

1. Lenkbares Radmodul für Lastwagen mit einem Radträger (1), der mit einem Achszapfen (3) und einer Achsschenkelvorrichtung (4) sowie einer Hilfsvorrichtung (2) versehen ist, die an dem Radträger (1) angebracht ist, wobei die Hilfsvorrichtung (2) mit wenigstens Teilen (29; 42-44) für eine Bremse versehen ist, **dadurch gekennzeichnet, daß** der Achszapfen (3) ein konisch oder zylindrisch geformtes Ende (17) besitzt, an dessen freiem Ende ein Schraubenbereich (18) vorgesehen ist, und die Achsschenkelvorrichtung eine entsprechend konisch oder zylindrisch geformte Bohrung (19) aufweist, an deren innerem Ende ein entsprechender Schraubenmutternbereich (20) vorgesehen ist.

2. Modul nach Anspruch 1, bei welchem die Befestigungsmittel eine Zentrierungs-/ Zentralbolzenverbindung aufweisen.

3. Modul nach Anspruch 1 oder 2, bei welchem, daß die Befestigungsmittel eine konische Hülse mit einem Hülsengewinde an einer zylindrischen Verbindung aufweisen.

4. Modul nach einem der Ansprüche 1 bis 3, bei welchem Sicherungsmittel zum Sichern der Befestigungsmittel (17, 19; 18, 20) vorgesehen sind.

5. Modul nach einem der vorhergehenden Ansprüche, bei welchem der Achszapfen (3) massiv ist.

6. Modul nach einem der Ansprüche 1 bis 4, bei welchem der Achszapfen eine Durchgangsbohrung aufweist, beispielsweise zur Aufnahme der Antriebswelle eines angetriebenen Rades.

7. Modul nach einem der vorhergehenden Ansprüche, bei welchem der Achszapfen aus zwei oder mehr dauerhaft verbundenen Teilen besteht.

8. Modul nach einem der vorhergehenden Ansprüche, bei welchem der Achszapfen (3) zwei zueinander beabstandete Laufbahnen (21, 22) für Radlagermittel (27, 28) aufweist.

9. Modul nach einem der vorhergehenden Ansprüche, bei welchem die Radlagermittel (27, 28) Rollenlager, Kugellager oder eine Kombination aus diesen aufweisen.

10. Modul nach einem der vorhergehenden Ansprüche, bei welchem der Radträger (1) einen Montageteil (11) und die Hilfsvorrichtung (2) eine Montagebohrung (12) aufweist, die auf dem Montageteil (11) in solcher Weise montiert ist, daß der Achszapfen (3) an einer Seite der Hilfsvorrichtung (2) und die Achsschenkelvorrichtung (4) an der anderen Seite der Hilfsvorrichtung (2) vorsteht.

11. Modul nach Anspruch 10, bei welchem der Radträger (1) und die Hilfsvorrichtung (2) verschraubt sind.

12. Modul nach einem der vorhergehenden Ansprüche, bei welchem die Hilfsvorrichtung (2) eine Lenkvorrichtung trägt, beispielsweise einen Hebel (30).

13. Modul nach einem der vorhergehenden Ansprüche, bei welchem die Hilfsvorrichtung (2) zwei Befestigungsohren (29) für eine Bremse aufweist, die auf gegenüberliegenden Seiten einer durch die Achszapfenachse definierten Ebene angeordnet sind.

14. Modul nach einem der vorhergehenden Ansprüche, bei welchem die Hilfsvorrichtung (2) eine hydraulische, pneumatische, oder elektromechanische Bremse oder eine Kombination aus diesen trägt.

15. Modul nach einem der vorhergehenden Ansprüche, bei welchem der Radträger (1) einen Grundkörper (5) aufweist, der zwei koaxiale Stützringe (6, 7) zur Aufnahme von Lagern zur Lagerung des Achsschenkels trägt.

16. Modul nach Anspruch 15, bei welchem die Lager ein Rollenlager, Kugellager und/oder ein Gleitlager aufweisen.

17. Modul nach Anspruch 15 oder 16, bei welchem der Grundkörper (5) den Achszapfen (3) trägt, der von den Stützringen (6, 7) wegweist.

18. Modul nach Anspruch 15 oder 16, bei welchem, daß die Hilfsvorrichtung aus metallischem, nichtmetallischem oder Kompositmaterial hergestellt oder durch Sintermetalltechniken gefertigt ist.

19. Modul nach Anspruch 15 oder 16, bei welchem, daß der Radträger aus metallischen, nicht-metallischem oder Kompositmaterial hergestellt oder durch Sintermetalltechniken gefertigt ist.

20. Modul nach einem der vorhergehenden Ansprüche, bei welchem das Modul Sensoren zum Überwachen von Lagerdrehzahl, Lagerbelastung, Winkelverlagerung, Temperatur, ABS-Bremsanlage oder dergleichen einschließt.

21. Modul nach einem der vorhergehenden Ansprüche, bei welchem die Achsschenkelvorrichtung (4) einen Achsschenkel (10) aufweist, der Befestigungsmittel (40) für eine Aufhängungsstütze (41) besitzt.

22. Modul nach einem der vorhergehenden Ansprüche, bei welchem ein Hebel (41) einer Servolenkung mit dem Achszapfen und der Achsschenkelvorrichtung verbunden ist.

23. Modul nach einem der vorhergehenden Ansprüche, bei welchem die Hilfsvorrichtung (2) mit Befestigungsmitteln (29) zur Montage von Bremsmitteln versehen ist.

24. Modul nach einem der Ansprüche 1 bis 22, bei welchem die Hilfsvorrichtung (2) mit wenigstens einem integrierten Aktuator (44) für Bremsmittel versehen ist.

25. Modul nach Anspruch 24, bei welchem die Hilfsvorrichtung (2) mit einem Motor zum Antreiben des wenigstens einen Aktuators (44) versehen ist.

26. Modul nach Anspruch 25, bei welchem der Motor (42) pneumatisch oder hydraulisch arbeitet.

27. Modul nach Anspruch 25, bei welchem der Motor (42) aus einem Elektromotor besteht.

28. Motor nach einem der Ansprüche 24 bis 27, bei welchem, daß die Hilfsvorrichtung (2) ein Untersetzungsgetriebe (43) aurweist.

## Revendications

1. Module de pivot de roue pour camion, comprenant une unité de support de roue (1) munie d'une fusée (3) et d'un agencement de pivot (4) ainsi qu'une unité auxiliaire (2) montée sur l'unité de support de roue (1), ladite unité auxiliaire (2) étant pourvue au moins de parties (29 ; 42-44) pour un moyen de freinage, **caractérisé en ce que** la fusée (3) comprend une extrémité de forme conique ou cylindrique (17), à l'extrémité libre de laquelle est prévue une partie vis (18), et l'agencement de pivot comprend un alésage de forme conique ou cylindrique correspondante (19), à l'extrémité intérieure duquel est prévue une partie écrou correspondante (20).

2. Module selon la revendication 1, dans lequel le moyen de montage comprend une connexion par boulon de centrage/central.

3. Module selon la revendication 1 ou 2, dans lequel le moyen de montage comprend un manchon conique avec un filetage de manchon sur une connexion cylindrique.

4. Module selon l'une quelconque des revendications 1 à 3, dans lequel des moyens de fixation sont prévus pour fixer le moyen de montage (17, 19 ; 18, 20).

5. Module selon l'une quelconque des revendications précédentes, dans lequel la fusée (3) est pleine.

6. Module selon l'une quelconque des revendications 1 à 4, dans lequel la fusée comporte un alésage traversant, par exemple pour loger l'arbre moteur d'une roue motrice.

7. Module selon l'une quelconque des revendications précédentes, dans lequel la fusée peut être constituée de deux parties jointes de façon permanente ou plus.

8. Module selon l'une quelconque des revendications précédentes, dans lequel la fusée (3) comprend deux chemins de roulement mutuellement espacés (21, 22) pour un moyen formant roulement de roue (27, 28).

9. Module selon l'une quelconque des revendications précédentes, dans lequel le moyen formant roulement de roue (27, 28) comprend des roulements à rouleaux, des roulements à bille ou une combinaison de ceux-ci.

10. Module selon l'une quelconque des revendications précédentes, dans lequel l'unité de support de roue (1) comprend une partie de montage (11), et l'unité auxiliaire (2) comprend un alésage de montage (12) monté sur la partie de montage (11), de telle manière que la fusée (3) fait saillie d'un côté de l'unité auxiliaire (2), et l'agencement de pivot (4) de l'autre côté de l'unité auxiliaire (2).

11. Module selon la revendication 10, dans lequel l'unité de support de roue (1) et l'unité auxiliaire (2) sont boulonnées l'une à l'autre.

12. Module selon l'une quelconque des revendications précédentes, dans lequel l'unité auxiliaire (2) supporte un dispositif de direction, par exemple un levier (30).

13. Module selon l'une quelconque des revendications précédentes, dans lequel l'unité auxiliaire (2) comprend deux oreilles de fixation (29) pour un frein, lesdites oreilles de fixation (29) étant positionnées sur les côtés opposés d'un plan défini par l'axe de la fusée.

14. Module selon l'une quelconque des revendications précédentes, dans lequel l'unité auxiliaire (2) supporte un frein hydraulique, pneumatique, électromécanique ou une combinaison de ceux-ci.

15. Module selon l'une quelconque des revendications précédentes, dans lequel l'unité de support de roue (1) comprend un élément de base (5) qui supporte deux anneaux de support coaxiaux (6, 7) pour loger des roulements de support de pivot (8, 9).

16. Module selon la revendication 15, dans lequel les roulements comprennent un roulement à rouleaux, un roulement à billes et/ou un palier lisse.

17. Module selon la revendication 15 ou 16, dans lequel l'élément de base (5) supporte la fusée (3), ladite fusée (3) étant orientée à l'écart des anneaux de support (6, 7).

18. Module selon la revendication 15 ou 16, dans lequel l'unité auxiliaire est faite d'un matériau métallique, non métallique ou composite, ou bien obtenu par des techniques de la métallurgie des poudres.

19. Module selon la revendication 15 ou 16, dans lequel l'unité de support de roue est faite d'un matériau métallique, non métallique ou composite, ou bien obtenu par des techniques de la métallurgie des poudres.

20. Module selon l'une quelconque des revendications précédentes, dans lequel le module comporte des capteurs pour surveiller la vitesse des roulements, la charge des roulements, le déplacement angulaire, la température, le système de frein ABS, etc.

21. Module selon l'une quelconque des revendications précédentes, dans lequel l'agencement de pivot (4) comprend un pivot (10) comportant un moyen de fixation (40) pour un support de suspension (41).

22. Module selon l'une quelconque des revendications précédentes, dans lequel un levier de direction (41) est connecté à la fusée et à l'agencement de pivot.

23. Module selon l'une quelconque des revendications précédentes, dans lequel l'unité auxiliaire (2) est pourvue de moyens de fixation (29) pour monter un moyen formant frein.

24. Module selon l'une quelconque des revendications 1 à 22, dans lequel l'unité auxiliaire (2) est pourvue d'au moins un actionneur intégré (44) pour monter un moyen formant frein.

25. Module selon la revendication 23, dans lequel l'unité auxiliaire (2) est pourvue d'un moyen formant moteur pour actionner ledit au moins un actionneur (44).

26. Module selon la revendication 25, dans lequel le moyen formant moteur (42) est de type pneumatique ou hydraulique.

27. Module selon la revendication 25, dans lequel le moyen formant moteur (42) comprend un moteur électrique.

28. Module selon l'une quelconque des revendications 24 à 27, dans lequel l'unité auxiliaire (2) comprend un moyen formant engrenage de réduction (43).
